# FASCICULE DE BREVET EUROPEEN

(11) **EP 4 196 254 B1**
(45) Date de publication et mention de la délivrance du brevet: **22.05.2024**
(21) Numéro de dépôt: 21790958.9
(22) Date de dépôt: 22.09.2021
(51) Int. Cl.: B01J 8/02, B01J 8/06

(54) **REACTEUR TUBULAIRE A LIT FIXE**
FESTBETT-ROHRREAKTOR
TUBULAR FIXED-BED REACTOR

(30) Priorité: 29.09.2020 FR 2009864
(43) Date de publication de la demande: 21.06.2023
(73) Titulaire: Commissariat à l'énergie atomique et aux énergies alternatives, 75015 Paris (FR)
(72) Inventeur: CHAISE, Albin, 38054 GRENOBLE CEDEX 09 (FR); BENGAOUER, Alain, 38054 GRENOBLE CEDEX 09 (FR); DUCROS, Frédéric, 38054 GRENOBLE CEDEX 09 (FR)
(74) Mandataire: Brevalex
(86) Numéro de dépôt international: PCT/FR2021/051625
(87) Numéro de publication internationale: WO 2022/069817

(56) Documents cités:
- WO-A1-2017/180957
- FR-A1- 2 924 624
- US-A1- 2011 165 483

## Description

### DOMAINE TECHNIQUE

La présente invention se rapporte au domaine des réacteurs échangeurs. En particulier, la présente invention se rapporte au domaine des réacteurs échangeurs catalytiques mettant en oeuvre un catalyseur solide, et notamment un catalyseur solide sous forme de poudre.

La présente invention propose à cet égard un réacteur échangeur catalytique susceptible de mettre en oeuvre des procédés de synthèses organiques exothermiques. Ces composés organiques peuvent notamment comprendre des carburants de synthèse et du combustible.

### ÉTAT DE LA TECHNIQUE ANTÉRIEURE

Les réacteurs catalytiques utilisant des catalyseurs solides sont largement mis en oeuvre pour la synthèse de composés organiques tels que les carburants de synthèse ou les combustibles parmi lesquels on peut citer les substituts de gaz naturel, le diméthyléther ou encore le méthanol.

Ces composés sont notamment obtenus par réaction d'hydrogène et d'oxyde de carbone en présence d'un catalyseur solide approprié.

Toutefois, les réactions chimiques relatives à la synthèse de ces composés sont très exothermiques, et dégagent une quantité de chaleur susceptible de dégrader le catalyseur solide. Cette dégradation du catalyseur solide se traduit notamment par une désactivation de ce dernier, et conduit à une réduction du taux de conversion des espèces chimiques en présence. La sélectivité des réactions mises en jeu est également affectée.

En pratique, ces réactions peuvent être mises en oeuvre dans un réacteur-échangeur du type tube-calandre qui comprend un canal réactif pourvu du catalyseur solide et refroidi continûment par un fluide caloporteur. Dans ce type de réacteur, les gaz réactifs circulent axialement dans les tubes qui contiennent un catalyseur, par exemple en poudre.

Néanmoins, en dépit de la mise en oeuvre d'un refroidissement par le fluide caloporteur, ce type de réacteur reste sensible à la chaleur dégagée par les réactions se produisant dans ledit réacteur.

En particulier, un point chaud, généralement observé à proximité de l'entrée des gaz réactifs, dégrade le catalyseur solide, et réduit donc les performances du réacteur-échangeur.

Afin de pallier ces problèmes, il alors été proposé un agencement permettant de répartir la distribution des réactifs sur toute la longueur des tubes. Cette solution permet alors d'obtenir une meilleure homogénéité de la température sur toute la longueur du réacteur.

A cet égard, les documents US3758279, US4374094, EP0560157, IT8021172 et US2997374 proposent des réacteurs-échangeurs mettant en oeuvre une distribution des réactifs à partir d'un espace de distribution annulaire. Notamment, ces réacteurs-échangeurs, de forme généralement cylindrique, comprennent, agencés de manière coaxiale et à partir de l'extérieur du réacteur, un tube, l'espace de distribution annulaire, une charge de catalyseur et un espace de collecte.

Cet agencement n'est toutefois pas satisfaisant.

En effet, la présence de l'espace de distribution annulaire disposé autour de la charge de catalyseur, limite les transferts de chaleur du catalyseur vers le tube rendant peu efficaces les systèmes de refroidissement généralement considérés. Il reste néanmoins possible d'insérer des éléments conducteurs de chaleur dans le réacteur. Une telle solution reste toutefois incompatible avec les réacteurs comprenant des tubes de faible diamètre.

Inversement, le document CN103990420 propose de mettre en oeuvre un insert pourvu d'une chambre de distribution et d'une chambre de collecte, disposée au centre d'un tube et définissant avec ce dernier une espace annulaire logeant le catalyseur solide.

Toutefois, l'agencement proposé dans ce document ne permet pas de répartir les réactifs de manière homogène au sein de l'espace annulaire. Plus particulièrement, cet agencement ne permet pas d'obtenir un profil de température optimal au sein du catalyseur solide.

La figure 1 du document US 8961909 représente un autre exemple de réacteur du type tube-calandre. Ce réacteur est notamment pourvu d'un tube d'injection, plongé dans un lit de poudre catalytique, et long duquel sont ménagés des perçages. Ces derniers sont notamment agencés pour assurer une injection du gaz réactif à différents niveaux du lit de poudre catalytique, et ainsi limiter l'apparition de points chauds dans ledit lit.

Toutefois, ce réacteur n'est pas satisfaisant.

En effet, afin d'assurer son refroidissement, ce réacteur requiert la mise en place d'une pluralité de circuits de circulation d'un fluide caloporteur, qui augmentent d'autant sa complexité.

Le document US7402719, notamment à la figure 3a, divulgue un autre exemple de réacteur agencé pour permettre une injection étagée d'un réactif C en vue de sa réaction avec un réactif A. Ce réacteur comprend à cet égard deux nappes (ou canaux) séparées par une paroi et destinées à assurer la circulation, respectivement, du réactif A et du réactif C. Les deux nappes sont par ailleurs en communication fluidique au moyen d'une pluralité de perçages ménagés dans la paroi les séparant. Ces perçages sont notamment agencés afin d'assurer un mélange progressif du réactif C avec le réactif A. Ce mélange progressif permet ainsi de limiter l'apparition de points chauds. Cependant, l'agencement du réacteur sous forme d'un empilement de nappes rend ce dernier peu compact. US2011/165483 décrit un réacteur tubulaire avec une chambre de distribution et une chambre de collecte.

Un but de la présente invention est de proposer un réacteur tubulaire à lit fixe permettant une distribution plus uniforme des réactifs au sein du catalyseur solide.

Un autre but de la présente invention est également de proposer un réacteur tubulaire à lit fixe permettant une répartition plus homogène du flux de chaleur généré au sein du catalyseur solide.

Un autre but de la présente invention est également de proposer un réacteur tubulaire à lit fixe permettant une meilleure gestion du refroidissement.

Un autre but de la présente invention est également de proposer un réacteur tubulaire à lit fixe pour lequel la fiabilité et la durée de vie sont améliorées au regard des réacteurs connus de l'état de la technique.

Un autre but de la présente invention est de proposer un réacteur tubulaire à lit fixe permettant d'optimiser (augmenter) le temps de passage des gaz dans le lit fixe de poudre catalytique.

Un autre but de la présente invention est de proposer un réacteur tubulaire à lit fixe permettant une injection étagée d'un ou plusieurs réactifs au sein du catalyseur solide.

### EXPOSÉ DE L'INVENTION

Les buts de la présente invention sont, au moins en partie, atteints par un réacteur tubulaire à lit fixe qui s'étend, selon un axe longitudinal XX', entre une première extrémité et une deuxième extrémité, ledit réacteur comprend un lit de poudre catalytique confiné dans un espace annulaire délimité par une paroi externe d'un tube creux et une paroi interne d'un insert creux disposé de manière coaxiale dans le tube creux,
l'insert creux comprend au moins une chambre de distribution et au moins une chambre de collecte, séparées l'une de l'autre par au moins une première paroi séparatrice, l'au moins une chambre de distribution comprenant une pluralité de compartiments de distribution séparés les uns des autres par une ou plusieurs deuxièmes parois séparatrices, chaque compartiment de distribution et l'au moins une chambre de collecte comprenant, respectivement, une ouverture d'admission de gaz au niveau de la première extrémité et une ouverture d'évacuation de gaz au niveau de la deuxième extrémité,
la paroi externe comprend des ouvertures distributrices et au moins une ouverture collectrice, qui s'étendent sur une longueur L, chaque ouverture distributrice permettant la distribution d'un gaz susceptible d'être admis par une ouverture d'admission dans un compartiment de distribution vers l'espace annulaire, et l'ouverture collectrice permettant la collecte du gaz distribué dans l'espace annulaire par la chambre de collecte.

Chaque ouverture distributrice et/ou chaque ouverture collectrice peut être formée par une unique ouverture.

De manière alternative, une ouverture distributrice et/ou une ouverture collectrice peut comprendre une pluralité d'ouverture, par exemple alignées selon sa direction d'extension.

Selon un mode de mise en oeuvre, ledit réacteur comprend au niveau de la première extrémité et au niveau de la deuxième extrémité, respectivement, un espace distributeur et un espace collecteur entre lesquels l'insert creux est disposé.

Selon un mode de mise en oeuvre, les compartiments de distribution sont obturés au niveau de la deuxième extrémité, et l'au moins une chambre de collecte est obturée au niveau de la première extrémité.

Selon un mode de mise en oeuvre, chaque compartiment de distribution est séparé de l'espace distributeur par une paroi, dite paroi d'admission dans laquelle est ménagée l'ouverture d'admission.

Selon un mode de mise en oeuvre, chaque ouverture d'admission est conformée pour imposer à un débit donné une perte de charge au gaz susceptible d'être admis dans le compartiment de distribution qui lui est associé.

Selon un mode de mise en oeuvre, la perte de charge imposée par une ouverture d'admission est ajustée en fonction d'une distance, dite distance réactive, mesurée dans l'espace annulaire, entre l'ouverture distributrice du compartiment de distribution considéré et l'ouverture collectrice la plus proche de ladite ouverture distributrice.

Selon un mode de mise en oeuvre, la perte de charge imposée par une ouverture d'admission est d'autant plus importante que la distance réactive est faible.

Selon un mode de mise en oeuvre, la perte de charge associée à une ouverture d'admission donnée est ajustée par la taille de ladite ouverture d'admission.

Selon un mode de mise en oeuvre, un élément poreux est logé dans l'ouverture d'admission, l'élément poreux présentant une porosité permettant d'imposer la perte de charge.

Selon un mode de mise en oeuvre, l'élément poreux peut comprendre au moins des matériaux choisis parmi : un matériau fibreux, notamment une laine, une tresse ou un tissu métallique ou céramique.

Selon un mode de mise en oeuvre, l'espace distributeur comprend une section volumique dans laquelle débouchent les ouvertures d'admission, ladite section volumique étant connectée à un conduit d'alimentation en gaz.

Selon un mode de mise en oeuvre, l'espace distributeur comprend des sous-sections volumiques dans chacune desquelles débouche au moins une ouverture d'admission.

Selon un mode de mise en oeuvre, les sous-sections volumiques forment des espaces d'admission annulaires disposés de manière concentrique et séparés par des parois annulaires étanches.

Selon un mode de mise en oeuvre, plusieurs ouvertures d'admission débouchent dans au moins une des sous-sections volumiques.

Selon un mode de mise en oeuvre, chacune des sous-sections volumiques est connectée à un conduit d'admission en gaz différent.

Selon un mode de mise en oeuvre, ledit réacteur est pourvu d'un film poreux en recouvrement de la paroi interne, et agencé pour prévenir un passage de poudre du lit de poudre catalytique à travers les ouvertures distributrices ou l'ouverture collectrice.

Selon un mode de mise en oeuvre, la poudre catalytique est retenue dans l'espace annulaire par un joint en matière fibreuse au niveau de chacune des extrémités de l'espace annulaire, avantageusement, le joint en matière fibreuse est maintenu en compression contre la poudre catalytique par un ressort, le ressort étant en butée contre une plaque de maintien lié mécaniquement du tube.

Selon un mode de mise en oeuvre, la deuxième paroi est dépourvue d'ouverture sur une première section et une deuxième section qui s'étendent à partir, respectivement, de la première extrémité et de la deuxième extrémité, la première section et la deuxième section étant en recouvrement avec le lit de poudre sur une hauteur H1, la hauteur H1 étant comprise entre 0,2 fois et 10 fois, avantageusement comprise entre 1 fois et 2 fois, la distance D₁ séparant une ouverture de distribution d'une ouverture collectrice immédiatement adjacente, et mesurée le long de la surface externe de la paroi externe.

Selon un mode de mise en oeuvre, l'insert creux est muni de moyens de centrage maintenant ce dernier en position coaxiale avec le tube creux, de manière avantageuse, les moyens de centrage comprennent des bossages formés sur la deuxième paroi.

Selon un mode de mise en oeuvre, l'ouverture collectrice et les ouvertures de distributrices présentent une largeur comprise entre 1/100 et 1/2, avantageusement comprise entre 1/20 et 1/4, du diamètre du tube creux.

Selon un mode de mise en oeuvre, l'insert creux forme une pièce monobloc.

### BRÈVE DESCRIPTION DES DESSINS

D'autres caractéristiques et avantages apparaîtront dans la description qui va suivre du réacteur tubulaire à lit fixe selon l'invention, donnés à titre d'exemples non limitatifs, en référence aux dessins annexés dans lesquels :
La figure 1 est une représentation schématique d'un réacteur tubulaire à lit fixe selon la présente invention, en particulier, la figure 1 représente le réacteur selon un plan en coupe longitudinal passant par un axe longitudinal XX' dudit réacteur ;
La figure 2 est une vue en coupe selon un plan transversal, perpendiculaire à l'axe longitudinal XX' du réacteur tubulaire de la figure 1, selon cette représentation, le réacteur tubulaire comprend deux chambres de distribution et deux chambres de collecte, chaque chambre de distribution est notamment divisée en cinq compartiments de distribution agencés de manière symétrique par rapport au plan bissecteur P, les flèches symbolisent le sens de circulation de ou des gaz dans l'espace annulaire ;
La figure 3 est une vue en coupe selon un plan transversal, perpendiculaire à l'axe longitudinal XX' du réacteur tubulaire de la figure 1, et illustrant des ouvertures d'admission de section différentes ;

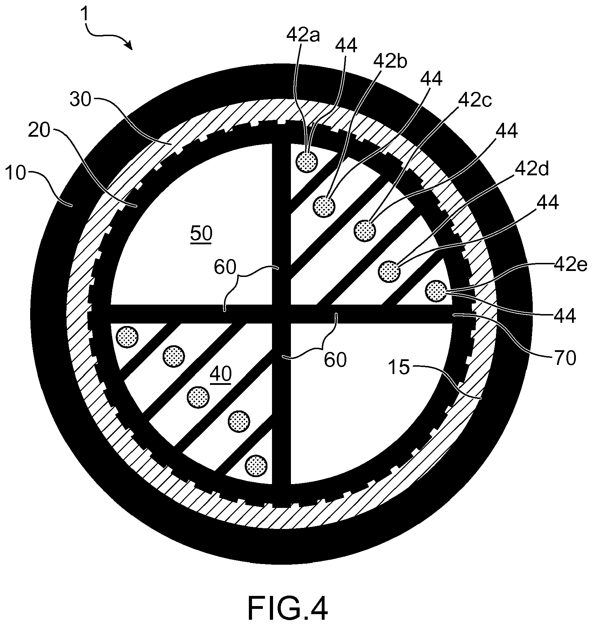

La figure 4 est une vue en coupe selon un plan transversal, perpendiculaire à l'axe longitudinal XX' du réacteur tubulaire de la figure 1, et illustrant des ouvertures d'admission au niveau desquelles sont logés des éléments poreux ;
La figure 5 est une représentation de l'insert creux selon la présente invention, et pourvu de bossages pour le centrage de l'insert creux dans le tube creux ;
La figure 6 est une représentation d'un élément filtre, et notamment d'un élément filtre formé de 4 plans de fibres, susceptible d'être mis en oeuvre dans le réacteur tubulaire selon la présente invention ;
La figure 7 est une représentation schématique d'un réacteur tubulaire à lit fixe selon un autre exemple de la présente invention, en particulier, la figure 7 représente le réacteur selon un plan coupe longitudinal passant par un axe longitudinal XX' dudit réacteur ;
La figure 8 est une représentation selon un plan de coupe longitudinal passant par un axe longitudinal XX' de l'espace distributeur selon une deuxième variante de la présente invention ;
La figure 9A est une vue selon le plan de coupe AA de la figure 8 ;
La figure 9B est une vue selon le plan de coupe BB de la figure 8 ;
La figure 9C est une vue selon le plan de coupe CC de la figure 8 ;
La figure 10 est une représentation schématique partielle (au niveau de la première extrémité) d'un agencement pourvu d'une pluralité de réacteurs tubulaires selon la présente invention.

### EXPOSÉ DÉTAILLÉ DE MODES DE RÉALISATION PARTICULIERS

La présente invention concerne un réacteur-échangeur tubulaire à lit de poudre catalytique fixe. Notamment le lit de poudre catalytique est confiné dans un espace annulaire délimité par une paroi, dite paroi externe, d'un tube creux et une autre paroi, dite paroi interne, d'un insert creux logé de manière coaxiale dans ledit tube.

L'insert creux, selon la présente invention, comprend au moins une chambre de distribution et au moins une chambre de collecte, séparées l'une de l'autre par au moins une première paroi séparatrice. Par ailleurs, l'au moins une chambre de distribution comprend une pluralité de compartiments de distribution séparés les uns des autres par une ou plusieurs deuxièmes parois séparatrices. Chaque compartiment de distribution et l'au moins une chambre de collecte comprennent, respectivement, une ouverture d'admission de gaz au niveau de la première extrémité et une ouverture d'évacuation de gaz au niveau de la deuxième extrémité.

Il est entendu que la présence d'une ouverture d'admission de gaz au niveau de la première extrémité implique que ladite ouverture est agencée pour permettre l'admission de gaz par la première extrémité. En d'autres termes, l'ouverture d'admission de gaz peut être disposée sur la première extrémité.

De manière équivalente, la présence d'une ouverture d'évacuation de gaz au niveau de la deuxième extrémité implique que ladite ouverture est agencée pour permettre l'évacuation de gaz par la deuxième extrémité. En d'autres termes, l'ouverture d'évacuation de gaz peut être disposée sur la deuxième extrémité.

La paroi interne comprend des ouvertures distributrices et au moins une ouverture collectrice, qui s'étendent sur une longueur L. Chaque ouverture distributrice permet la distribution d'un gaz susceptible d'être admis par une ouverture d'admission dans un compartiment de distribution vers l'espace annulaire, et l'ouverture collectrice permet la collecte du gaz distribué dans l'espace annulaire par la chambre de collecte.

La mise en oeuvre d'une pluralité de compartiments de distribution permet de répartir la distribution de gaz réactif, à partir d'une même chambre de distribution, en différents endroits du lit de poudre catalytique. Ce mode de distribution limite ainsi l'apparition de points chauds et préserve les performances du lit de poudre catalytique.

De manière équivalente, la multiplicité des compartiments de distribution permet d'envisager la distribution de gaz ou de mélanges de gaz de natures différentes dans l'espace annulaire. Ce dernier aspect permet de contrôler les réactions mises en jeu dans le lit de poudre, et notamment leur sélectivité.

Les avantages associés aux différents aspects de la présente invention apparaîtront plus clairement à la lecture de la description détaillée qui suit.

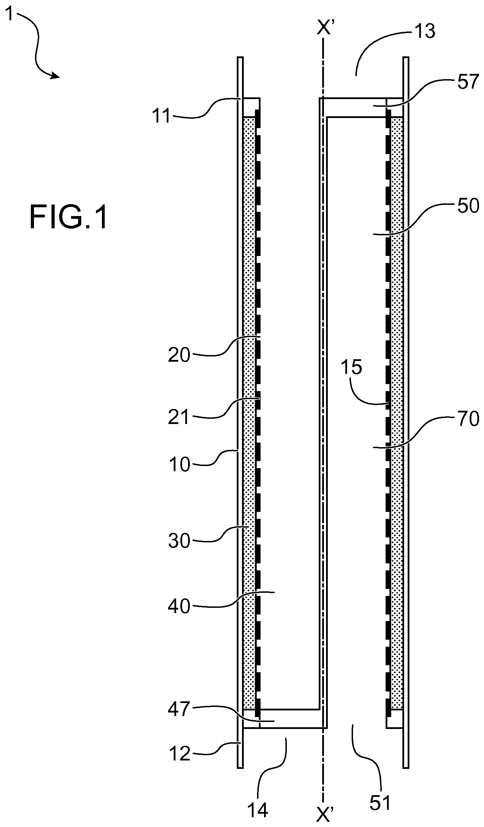

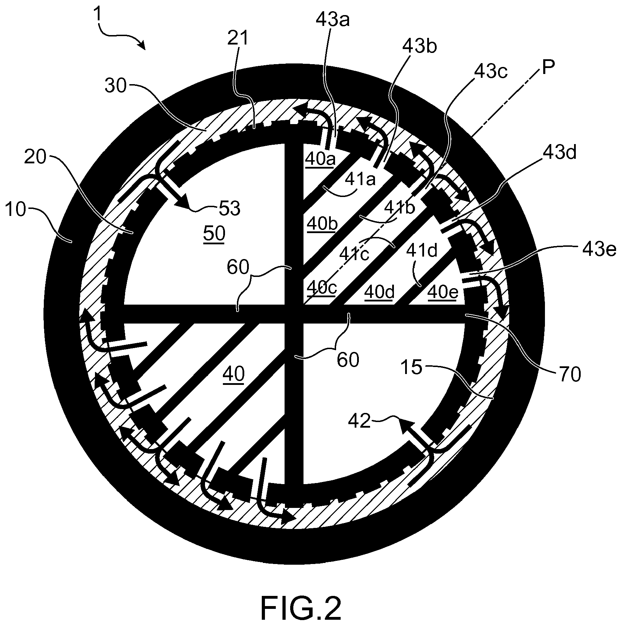

Ainsi, aux figures 1 et 2, on peut voir un exemple de réalisation d'un réacteur tubulaire à lit fixe selon la présente invention.

Le réacteur tubulaire 1 selon la présente invention comprend un tube creux 10 qui, s'étend selon un axe longitudinal XX', entre une première extrémité 11 et une deuxième extrémité 12. Le tube creux 10 peut présenter une symétrie de révolution autour de l'axe longitudinal XX'. Il est donc entendu que l'axe longitudinal XX' peut être un axe de révolution du tube creux 10.

Le tube creux 10 peut comprendre un métal, et notamment un métal choisi parmi : acier, alliage d'aluminium, de cuivre, de nickel.

Le diamètre de la surface interne du tube creux peut être compris entre 5 mm et 100 mm.

La paroi, dite paroi externe 15, formant le tube creux 10 peut présenter une épaisseur comprise entre 0,5 mm et 10 mm.

Le tube creux 10 peut présenter une longueur comprise entre 10 fois et 200 fois le diamètre de la surface interne.

Le réacteur tubulaire 1 comprend également un insert creux 20 qui s'étend également selon l'axe longitudinal XX' et présente une forme généralement cylindrique.

L'insert creux 20 est notamment logé dans le volume V du tube creux de manière coaxiale à ce dernier. En particulier, l'insert 20 comprend également une paroi, dite paroi interne 21, qui délimite avec la paroi externe 15 un espace annulaire 30.

L'espace annulaire 30 est, à cet égard, rempli d'une poudre catalytique, et sera le siège des réactions de conversion de gaz réactifs susceptibles de transiter dans le réacteur tubulaire 1.

L'espace annulaire 30 peut présenter une épaisseur, définie comme la distance entre la paroi externe 15 et la paroi interne 21, comprise entre 2% et 20 % du diamètre de la surface interne du tube creux 10.

L'insert creux 20 peut être une pièce monobloc.

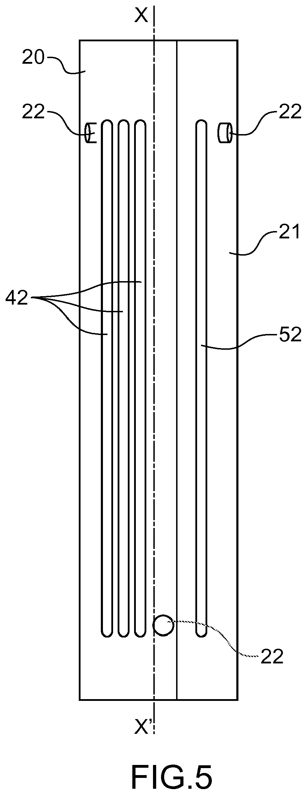

De manière particulièrement avantageuse, l'insert creux 20 peut être muni de moyens de centrage maintenant ce dernier en position coaxiale avec le tube creux. Par exemple, tel que représenté à la figure 5 les moyens de centrage comprennent des bossages 22 formés sur la paroi interne.

Ces moyens de centrage permettent notamment de considérer un insert creux d'une longueur au moins 20 fois supérieure au diamètre dudit insert.

Par ailleurs, ces moyens permettent également de faciliter le montage du réacteur tubulaire 1.

L'insert creux 20 comprend par ailleurs au moins une chambre de distribution 40 et au moins une chambre de collecte 50. Notamment, l'insert creux 20 peut comprendre entre 1 et 4 chambres de distribution 40 et entre 1 et 4 chambres de collecte 50.

L'au moins une chambre de distribution 40 et l'au moins une chambre de collecte 50 sont avantageusement disposées en alternance, et s'étendent sur toute la longueur de l'insert creux 20. L'au moins une chambre de collecte 50 et l'au moins une chambre de distribution 40 sont par ailleurs séparées les unes des autres par des premières parois séparatrices 60. Il est donc entendu qu'une chambre de distribution 40 est délimitée par deux parois séparatrices 60 et une section de la paroi interne 21.

De manière équivalente, une chambre de collecte 50 est également délimitée par deux premières parois séparatrices 60 et une autre section de la paroi interne 21.

Par ailleurs, les premières parois séparatrices 60 s'étendent sur toute la longueur de l'insert creux dans le volume défini par l'insert creux 20, et sont agencées pour prévenir tout passage direct de gaz d'une chambre à l'autre.

Par exemple, les premières parois séparatrices 60 forment des plans passant par l'axe longitudinal XX'. Notamment, les deux premières parois séparatrices 60 d'une chambre de distribution 40 peuvent présenter une forme généralement allongée et s'étendre selon l'axe longitudinal XX' de la première extrémité 11 vers la deuxième extrémité 12. En particulier, les deux premières parois séparatrices 60 d'une chambre de distribution 40 peuvent présenter un côté commun en coïncidence avec l'axe longitudinal XX'. Il est par ailleurs entendu que les deux premières parois 60 d'une chambre de distribution 40 peuvent être coplanaires, notamment lorsque l'insert creux 20 comprend une unique chambre de distribution 40.

Chaque chambre de distribution 40 comprend par ailleurs une pluralité de compartiments de distribution 40a, 40b, 40c, 40d et 40e, séparés les uns des autres par une ou plusieurs deuxièmes parois séparatrices 41a, 41b, 41c et 41d agencées pour prévenir tout passage direct de gaz d'un compartiment à l'autre.

Les deuxièmes parois séparatrices 41a, 41b, 41c et 41d peuvent avantageusement être parallèles entre elles, et plus particulièrement être parallèles à un plan bissecteur P des premières parois 60 délimitant la chambre de distribution 40.

Selon cette configuration, les compartiments de distribution 40a, 40b, 40c, 40d et 40e s'étendent de la première extrémité 11 vers la deuxième extrémité 12.

Plus particulièrement, et toujours selon cette configuration, les compartiments de distribution 40a, 40b, 40c, 40d et 40e forment un agencement symétrique par rapport au plan bissecteur P.

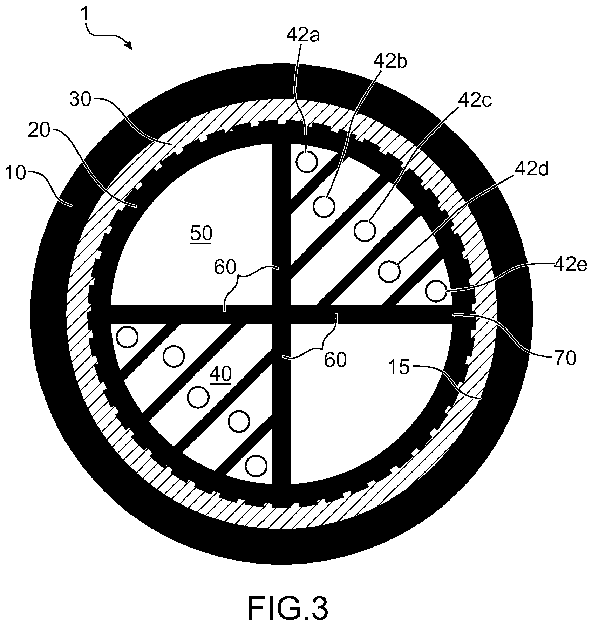

Chaque compartiment de distribution 40a, 40b, 40c, 40d et 40e comprend une ouverture d'admission 42a, 42b, 42c, 42d et 42e de gaz au niveau de la première extrémité 11 (figures 1 et 3) dudit insert 20 par laquelle un ou des gaz réactifs sont susceptibles d'être admis.

De manière équivalente, l'au moins une chambre de collecte 50 comprend une ouverture d'évacuation 51 au niveau de la deuxième extrémité 12 de l'insert creux 20 et par laquelle un ou plusieurs gaz sont susceptibles d'être évacués (figure 1).

Par ailleurs, les compartiments de distribution 40a, 40b, 40c, 40d et 40e sont obturés au niveau de la deuxième extrémité 12, et l'au moins une chambre de collecte 50 est obturée au niveau de la première extrémité 11.

L'insert creux 20 est également pourvu d'une pluralité d'ouvertures distributrices 43a, 43b, 43c, 43d et 43e qui s'étendent de façon continue ou non sur une longueur L, et avantageusement parallèlement à l'axe longitudinal XX'.

Chaque ouverture distributrice peut être formée par une unique ouverture,

De manière alternative, une ouverture distributrice peut comprendre une pluralité d'ouvertures, par exemple alignées selon sa direction d'extension.

Notamment, chacune de ces ouvertures distributrices 43a, 43b, 43c, 43d et 43e forme un ou plusieurs passage dans la paroi interne 21, et est associée à un compartiment de distribution 40a, 40b, 40c, 40d et 40e différent. En particulier, chaque ouverture distributrice 43a, 43b, 43c, 43d et 43e est agencée pour permettre la distribution dans l'espace annulaire 30 d'un gaz susceptible d'être admis, par une ouverture d'admission 42a, 42b, 42c, 42d et 42e, dans le compartiment de distribution 40a, 40b, 40c, 40d et 40e auquel elle est associée.

L'insert creux 20 comprend également au moins une ouverture collectrice 53, qui s'étend sur une longueur L, et avantageusement parallèlement à l'axe longitudinal XX'. L'au moins une ouverture collectrice 53 forme notamment un passage dans la paroi interne 21, et est associée à l'au moins une chambre de collecte 50. En particulier, l'au moins une ouverture collectrice 53 est agencée pour permettre la collecte, par la chambre de collecte 50, d'un gaz distribué dans l'espace annulaire 30.

Chaque ouverture collectrice peut être formée par une unique ouverture,

De manière alternative, une ouverture collectrice peut comprendre une pluralité d'ouvertures, par exemple alignées selon sa direction d'extension.

Ainsi, l'ouverture distributrice 43a, 43b, 43c, 43d et 43e, d'un compartiment de distribution 40a, 40b, 40c, 40d et 40e, permet la distribution d'un gaz susceptible d'être admis, par l'ouverture d'admission 42a, 42b, 42c, 42d et 42e, dans ledit compartiment vers l'espace annulaire 30.

De manière équivalente, l'ouverture collectrice 53 permet la collecte, du gaz distribué dans l'espace annulaire 30, par la chambre de collecte 50.

La multiplicité des compartiments de distribution associés à une chambre de distribution donnée permet ainsi de d'injecter un ou des gaz réactifs dans l'espace annulaire 30 en différentes zones dudit espace 30. Cette répartition des zones d'injection de gaz permet de reproduire le principe d'une injection étagée et ainsi limiter l'apparition d'échauffements locaux (points chauds) au niveau de la zone annulaire 30. Cette limitation d'échauffement prévient également les phénomènes de frittage de la poudre catalytique présente dans l'espace annulaire.

La considération d'une pluralité de compartiments de distribution 40a, 40b, 40c, 40d et 40e par chambre de distribution 40 permet d'envisager un insert creux 20 limité à une unique, voire deux, chambres de distribution. Un tel agencement permet par ailleurs de simplifier la fabrication de l'insert creux 20.

L'extension des ouvertures distributrices 43a, 43b, 43c, 43d et 43e sur la longueur L permet également d'étaler l'injection de gaz dans l'espace annulaire 30 et ainsi limiter l'apparition de points chauds.

Les ouvertures distributrices 43a, 43b, 43c, 43d et 43e peuvent présenter une largeur comprise entre 1/100 et 1/2, avantageusement comprise entre 1/20 et 1/4, du diamètre du tube creux 10.

De manière avantageuse, les ouvertures distributrices 43a, 43b, 43c, 43d et 43e d'une chambre de distribution 40 donnée peuvent être agencées de manière symétrique par rapport à un plan bissecteur P des parois 60 délimitant ladite chambre (figure 2).

Ainsi, lors du fonctionnement du réacteur tubulaire 1, un gaz est admis par les ouvertures d'admission 42a, 42b, 42c, 42d et 42e dans chacun des compartiments de distribution 40a, 40b, 40c, 40d et 40e. Ce gaz est alors distribué dans l'espace annulaire 30 par chacune des ouvertures distributrices 43a, 43b, 43c, 43d et 43e, et est ensuite collecté par la ou les ouvertures collectrices 53.

Le parcours du gaz dans l'espace annulaire 30 est fonction du positionnement relatif des ouvertures d'admission 42a, 42b, 42c, 42d et 42e et de la ou des ouvertures collectrices 53. En particulier, et tel qu'illustré par les flèches à la figure 2, le gaz distribué par une ouverture distributrice donnée, est majoritairement collecté par l'ouverture collectrice 53 qui est la plus proche de ladite ouverture distributrice. Par « ouverture collectrice qui est la plus proche de ladite ouverture distributrice », on entend l'ouverture collectrice qui est associée au parcours réactif du gaz le plus court au regard des autres ouvertures collectrices. En d'autres termes, l'ouverture collectrice qui est la plus proche de ladite ouverture distributrice n'est autre que la première ouverture collectrice rencontrée par le gaz lors de sa circulation dans l'espace annulaire 30.

Le réacteur tubulaire 1 peut comprendre au niveau de la première extrémité 11 et au niveau de la deuxième extrémité 12, respectivement, un espace distributeur 13 et un espace collecteur 14 entre lesquels l'insert creux 20 est disposé (figure 1).

À cet égard, chaque compartiment de distribution 40a, 40b, 40c, 40d et 40e est séparé de l'espace distributeur 13 par une paroi, dite paroi d'admission 44 dans laquelle est ménagée l'ouverture d'admission 42a, 42b, 42c, 42d et 42e (figure 3).

Selon un mode de réalisation avantageuse, chaque ouverture d'admission 42a, 42b, 42c, 42d et 42e est conformée pour imposer une perte de charge au gaz susceptible d'être admis dans le compartiment de distribution 40a, 40b, 40c, 40d et 40e qui est fonction d'une distance, dite distance réactive, effectivement parcourue par ledit gaz dans l'espace annulaire 30.

À cet égard, la distance réactive dépend du compartiment considéré, et notamment de la distance entre l'ouverture distributrice dudit compartiment et l'ouverture collectrice 52 la plus proche. En particulier, l'ouverture d'admission 42a, 42b, 42c, 42d et 42e d'un compartiment de distribution 40a, 40b, 40c, 40d et 40e donné peut être conformée pour imposer une perte de charge d'autant plus importante que la distance entre l'ouverture distributrice dudit compartiment et l'ouverture de collecte la plus proche, est faible.

De manière avantageuse, et tel illustrée à la figure 3, la perte de charge associée à une ouverture d'admission donnée est ajustée par sa section. Plus particulièrement, la perte de charge imposée par une ouverture d'admission augmente au fur et à mesure que sa section diminue (la section d'une ouverture, selon la présente invention, n'est autre que la surface ou l'étendue de ladite ouverture).

De manière alternative ou complémentaire, et tel qu'illustré à la figure 5, la perte de charge au niveau d'une ouverture d'admission 42a, 42b, 42c, 42d et 42e peut être imposée par un élément poreux 44 logé dans ladite ouverture d'admission 42a, 42b, 42c, 42d et 42e. En particulier, chaque élément poreux 44 présente une porosité permettant d'imposer une perte de charge prédéterminée à un débit de gaz donné.

À cet égard, l'élément poreux peut comprendre au moins un des matériaux choisi parmi : un matériau fibreux, notamment une laine, une tresse ou un tissu métallique ou céramique.

La considération d'une perte de charge ajustée en fonction de la distance réactive permet de mieux répartir et contrôler les flux de gaz dans l'espace annulaire. Il résulte de cette considération une meilleure optimisation des phénomènes d'échauffement locaux du lit de poudre catalytique, et par voie de conséquence une amélioration des performances dudit lit.

L'invention ne se limite cependant pas au seul ajustement de la perte de charge imposée au niveau des ouvertures d'admission. En effet, l'homme du métier, sur la base des éléments ci-avant, pourra également considérer, de manière alternative ou complémentaire, d'imposer une perte de charge au niveau des ouvertures distributrices.

De manière avantageuse, le réacteur-tubulaire 1 comprend un filtre agencé pour prévenir le passage de la poudre catalytique dans les compartiments de distribution ou la chambre de collecte.

Par exemple, tel qu'illustré à la figure 2, un filtre 70 peut être disposé en recouvrement de la paroi interne 21.

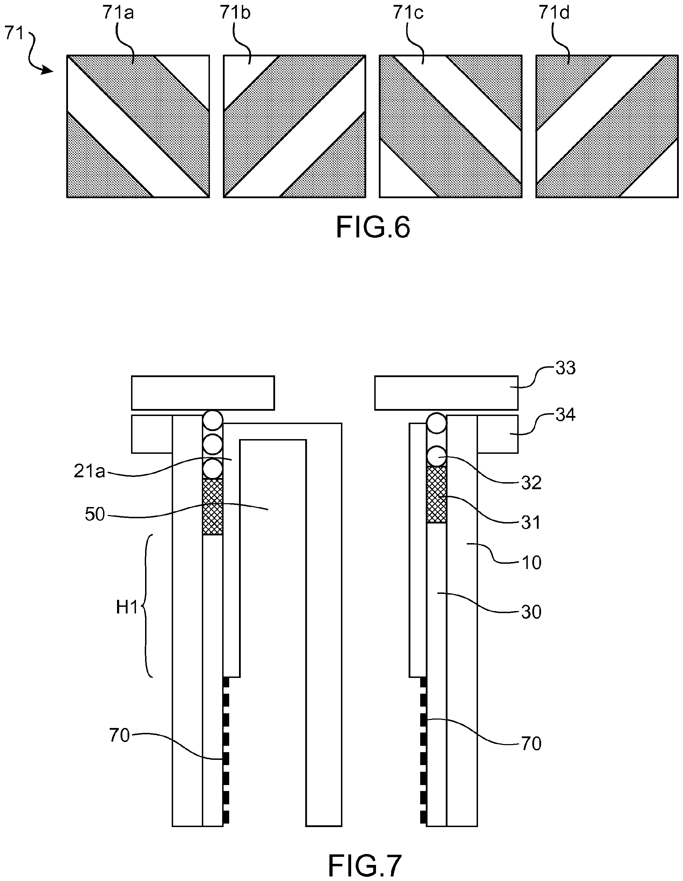

De manière alternative, le filtre peut comprendre des éléments filtres 71 logés dans les ouvertures distributrices et les ouvertures collectrice. Un élément filtre 71 peut comprendre une pluralité de plans 71a, 71b, 71c et 71d comprenant des fibres. L'exemple illustré à la figure 6 comprend en particulier 4 plans, pourvus chacun de fibres rectangulaires ou rondes et inclinées à +/-45° par rapport à l'axe longitudinal XX'. Plus particulièrement, les fibres de deux plans successifs sont orientées selon deux angles différents, et sont notamment perpendiculaires d'un plan à l'autre.

Selon un aspect particulièrement avantageux illustré à la figure 7, la poudre catalytique est retenue dans l'espace annulaire 30 par un joint 31, par exemple en matière fibreuse, au niveau de chacune des extrémités dudit espace annulaire 30.

Dans la mesure où le joint est en matière fibreuse, ce dernier est nécessairement poreux et donc perméable aux gaz réactifs.

La matière fibreuse peut à cet égard comprendre au moins un des éléments choisi parmi : fibre de verre, fibre de céramique, fibre de métal, fibre de carbone, fibre de matériau polymère.

Le joint 31 peut notamment être sous forme d'une tresse, d'une gaine, d'une cordelette ou simplement comprendre un bourrage de la matière fibreuse.

La matière fibreuse est avantageusement un isolant thermique et présente une conductivité thermique sensiblement équivalente à celle du catalyseur utilisé (0,2 W/m/K à 10 W/m/K).

Selon un mode de réalisation avantageux, le joint 31 en matière fibreuse est maintenu en compression contre la poudre catalytique par un ressort 32. Par exemple, le ressort 32 est en butée contre une plaque de maintien 33 lié mécaniquement au tube par une bague 34.

Le joint 31 en matière fibreuse en combinaison avec le ou les ressorts permet de mieux compacter la poudre catalytique et de prévenir l'attrition de cette dernière lors de la manipulation ou le transport du réacteur.

Dans la mesure où le joint 31 est poreux, les gaz réactifs peuvent pénétrer dans l'espace annulaire directement sans passer par les compartiments de distribution.

Dans ce cas de figure (figure 7), il est particulièrement avantageux de prévoir un agencement de l'insert creux 20 permettant d'imposer à ce gaz réactif un chemin de parcours prédéterminé dans l'espace annulaire afin de favoriser sa conversion au contact du lit de poudre catalytique. Ce parcours prédéterminé est d'une longueur comprise entre 0,2 fois et 10 fois, avantageusement comprise entre 1 fois et 2 fois, la distance réactive définie précédemment.

À cette fin, la paroi interne 21 peut être dépourvue d'ouvertures sur une première section 21a et une deuxième section qui s'étendent à partir, respectivement, de la première extrémité 11 et de la deuxième extrémité 12.

À cet égard la première section 21a et la deuxième section sont en recouvrement avec le lit de poudre sur une hauteur H1. La hauteur H1 étant comprise entre 0,5 fois et 10 fois, avantageusement entre une fois et 2 fois, la distance réactive.

L'admission des gaz, tel que décrit précédemment, s'effectue au niveau de l'espace distributeur. Ce dernier peut à cet égard être agencé, selon une première variante, pour permettre l'admission d'un même gaz dans chacun des compartiments de distribution, ou, selon une deuxième variante, pour permettre l'admission de gaz différents d'un compartiment à l'autre.

Selon la première variante (figure 1), l'espace distributeur 13 comprend une section volumique dans laquelle débouchent l'ensemble des ouvertures d'admission. Selon cette première variante, la section volumique est connectée à un conduit d'alimentation en gaz. En d'autres termes, l'ensemble des compartiments de distribution 40a, 40b, 40c, 40d et 40e sont alimentés par le même gaz ou mélange de gaz.

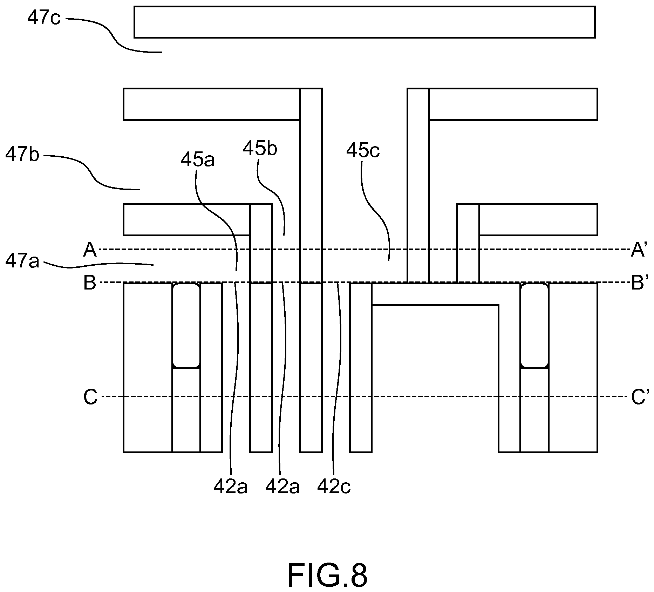

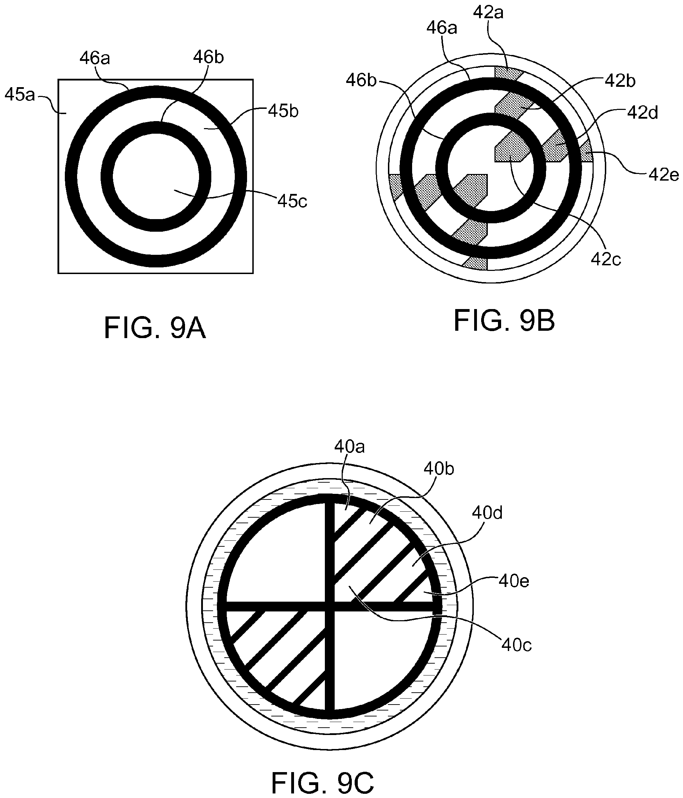

Selon la deuxième variante illustrée aux figures 8, 9A, 9B et 9C, l'espace distributeur 13 comprend des sous-sections volumiques 45a, 45b et 45c dans chacune desquelles débouche au moins une ouverture d'admission 42a, 42b, 42c, 42d et 42e. De manière avantageuse, les sous-sections volumiques 45a, 45b et 45c forment des espaces d'admission annulaires disposés de manière concentrique et séparés par des parois annulaires 46a, 46b étanches (figures 9A et 9B). De manière avantageuse, plusieurs ouvertures d'admission 42a, 42b, 42c, 42d et 42e peuvent déboucher dans au moins une des sous-sections volumiques. À titre d'exemple, les ouvertures d'admission 42a, 42b, 42c, 42d et 42e associées à des compartiments de distribution 40a, 40b, 40c, 40d et 40e imposant au gaz une même distance réactive peuvent déboucher dans la même sous-section volumique. Notamment, tel que représenté à la figure 9B, les ouvertures d'admission 42a et 42c débouchent dans la sous-section volumique 45a, les ouvertures d'admission 42b et 42d dans la sous-section volumique 45b, et l'ouverture d'admission 42c dans la sous-section volumique 45c.

De manière avantageuse, chacune des sous-sections volumiques 45a, 45b et 45c peut être connectée à un conduit d'admission en gaz différent. Notamment, les sous-sections volumiques 45a, 45b et 45c sont connectées, respectivement, à un premier conduit 47a, un deuxième conduit 47b et un troisième conduit 47c (figure 8).

Il est ainsi possible selon cette deuxième variante d'envisager l'injection de différents gaz ou différents mélange de gaz dans les compartiments de distribution.

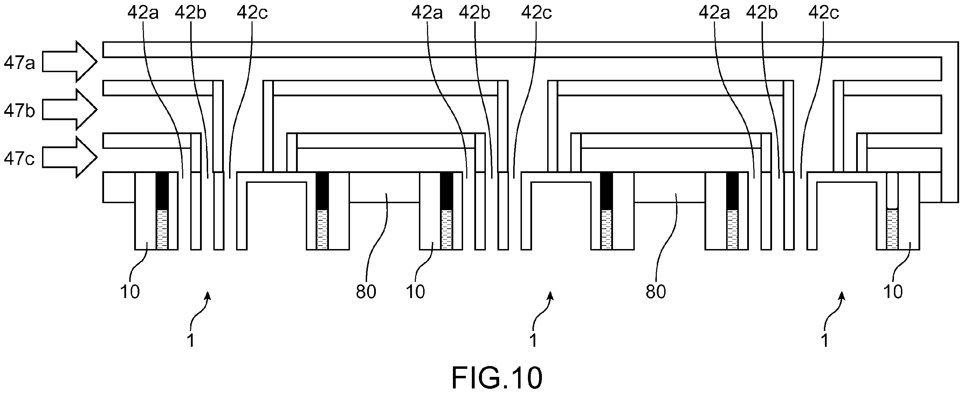

La figure 10 est une illustration de la mise en oeuvre d'une pluralité de réacteurs tubulaires 1 selon la présente invention, et notamment selon la deuxième variante (il est néanmoins entendu que la première variante peut également être considérée). Cette mise en oeuvre comprend notamment 3 réacteurs tubulaires 1 disposés parallèlement les uns aux autres dans une calandre. Des plaques de maintien tubulaire 80 permettent notamment de maintenir les réacteurs tubulaires, et de ménager un espace de circulation d'un fluide caloporteur destiné au refroidissement des réacteurs tubulaires 1.

Par ailleurs, l'ensemble des réacteurs tubulaires peuvent être alimentés en gaz par les mêmes conduits d'alimentation : les conduits d'alimentation 47a, 47b et 47c.

En particulier, et tel que représenté à la figure 10, le conduit 47a notamment connecté à la sous-section volumique 45a de chacun des réacteurs 1, le conduit 47b notamment connecté à la sous-section volumique 45b de chacun des réacteurs 1, et le conduit 47c notamment connecté à la sous-section volumique 45c de chacun des réacteurs 1.

Le réacteur tubulaire selon la présente invention, et notamment la mise en oeuvre de compartiment dans la ou les chambres de distribution permet d'envisager une distribution étagée des gaz et les mélanges de gaz dans l'espace annulaire.

Cette configuration répond ainsi favorablement à la problématique d'échauffement de la poudre catalytique, et limite ainsi l'apparition de points chauds. Il en résulte un dispositif plus performant et plus durable.

En outre, la disposition de la poudre catalytique dans l'espace annulaire facilite le refroidissement de cette dernière.

Le réacteur tubulaire selon la présente invention est avantageusement mis en oeuvre pour la synthèse du méthane, du méthanol, du diméthyléther ou encore pur mettre en oeuvre la synthèse de Fisher-Tropsch.

L'insert creux peut être fabriqué sous forme d'une pièce monobloc selon un procédé de fabrication additive (par exemple un procédé de fabrication 3D). Ces procédés de fabrication ouvrent la voie à la formation de pièces de forme complexe, notamment la formation d'une pièce monobloc comprenant l'espace distributeur, l'espace collecteur, et l'insert creux.

De manière alternative, l'insert creux peut être un élément indépendant assemblé avec un espace distributeur, formé par un premier corps terminal, et un espace collecteur, formé par un deuxième corps terminal.

L'assemblage peut impliquer la mise en oeuvre de joints intercalés entre chacun des corps terminaux et l'insert creux.

## Revendications

1. Réacteur tubulaire (1) à lit fixe qui s'étend, selon un axe longitudinal XX', entre une première extrémité (11) et une deuxième extrémité (12), ledit réacteur comprend un lit de poudre catalytique confiné dans un espace annulaire (30) délimité par une paroi externe (15) d'un tube creux (10) et une paroi interne (21) d'un insert creux (20) disposé de manière coaxiale dans le tube creux (10),
l'insert creux (20) comprend au moins une chambre de distribution (40) et au moins une chambre de collecte (50), séparées l'une de l'autre par au moins une première paroi séparatrice (60), l'au moins une chambre de distribution (40) comprenant une pluralité de compartiments de distribution (40a, 40b, 40c, 40d et 40e) séparés les uns des autres par une ou plusieurs deuxièmes parois séparatrices (41a, 41b, 41c et 41d), chaque compartiment de distribution (40a, 40b, 40c, 40d et 40e) et l'au moins une chambre de collecte (50) comprenant, respectivement, une ouverture d'admission (42a, 42b, 42c, 42d et 42e) de gaz au niveau de la première extrémité (11) et une ouverture d'évacuation (51) de gaz au niveau de la deuxième extrémité (12),
la paroi interne (21) comprend des ouvertures distributrices (43a, 43b, 43c, 43d et 43e) et au moins une ouverture collectrice (53) qui s'étendent sur une longueur L, chaque ouverture distributrice (43a, 43b, 43c, 43d et 43e) permettant la distribution d'un gaz susceptible d'être admis par une ouverture d'admission (42a, 42b, 42c, 42d et 42e) dans un compartiment de distribution vers l'espace annulaire (30) et l'ouverture collectrice (53) permettant la collecte du gaz distribué dans l'espace annulaire (30) par la chambre de collecte (50).

2. Réacteur selon la revendication 1, dans lequel ledit réacteur comprend au niveau de la première extrémité (11) et au niveau de la deuxième extrémité (12), respectivement, un espace distributeur (13) et un espace collecteur (14) entre lesquels l'insert creux (20) est disposé.

3. Réacteur selon la revendication 2, dans lequel les compartiments de distribution (40a, 40b, 40c, 40d et 40e) sont obturés au niveau de la deuxième extrémité (12), et l'au moins une chambre de collecte (50) est obturée au niveau de la première extrémité (11).

4. Réacteur selon la revendication 2 ou 3, dans lequel chaque compartiment de distribution est séparé de l'espace distributeur (13) par une paroi, dite paroi d'admission, dans laquelle est ménagée l'ouverture d'admission (42a, 42b, 42c, 42d et 42e), optionnellement dans lequel chaque ouverture d'admission (42a, 42b, 42c, 42d et 42e) est conformée pour imposer une perte de charge au gaz susceptible d'être admis dans le compartiment de distribution qui lui est associé, optionnellement la perte de charge imposée par une ouverture d'admission (42a, 42b, 42c, 42d et 42e) est ajustée en fonction d'une distance, dite distance réactive, mesurée dans l'espace annulaire (30), entre l'ouverture distributrice (43a, 43b, 43c, 43d et 43e) du compartiment de distribution considéré et l'ouverture collectrice (53) la plus proche de ladite ouverture distributrice (43a, 43b, 43c, 43d et 43e).

5. Réacteur selon la revendication 4, dans lequel la perte de charge imposée par une ouverture d'admission (42a, 42b, 42c, 42d et 42e) est d'autant plus importante que la distance réactive est faible, optionnellement dans lequel la perte de charge associée à une ouverture d'admission (42a, 42b, 42c, 42d et 42e) donnée est ajustée par la taille de ladite ouverture d'admission (42a, 42b, 42c, 42d et 42e).

6. Réacteur selon la revendication 5, dans lequel un élément poreux est logé dans l'ouverture d'admission (42a, 42b, 42c, 42d et 42e), l'élément poreux présentant une porosité permettant d'imposer la perte de charge, optionnellement dans lequel l'élément poreux peut comprendre au moins un des matériaux choisi parmi : un matériau fibreux, notamment une laine, une tresse ou un tissu métallique ou céramique.

7. Réacteur selon l'une des revendications 2 à 6, dans lequel l'espace distributeur (13) comprend une section volumique dans laquelle débouchent les ouvertures d'admission, ladite section volumique étant connectée à un conduit d'alimentation en gaz.

8. Réacteur selon l'une des revendications 2 à 6, dans lequel l'espace distributeur (13) comprend des sous-sections volumiques (45a, 45b et 45c) dans chacune desquelles débouche au moins une ouverture d'admission (42a, 42b, 42c, 42d et 42e).

9. Réacteur selon la revendication 8, dans lequel les sous-sections volumiques (45a, 45b et 45c) forment des espaces d'admission annulaires disposés de manière concentrique et séparés par des parois annulaires (46a, 46b) étanches, optionnellement dans lequel plusieurs ouvertures d'admission débouchent dans au moins une des sous-sections volumiques (45a, 45b et 45c), optionnellement dans lequel chacune des sous-sections volumique est connectée à un conduit d'admission en gaz différent.

10. Réacteur selon l'une des revendications 1 à 9, dans lequel ledit réacteur est pourvu d'un film poreux en recouvrement de la paroi interne (21), et agencé pour prévenir un passage de poudre du lit de poudre catalytique à travers les ouvertures distributrices (43a, 43b, 43c, 43d et 43e) et/ou l'ouverture collectrice (53).

11. Réacteur selon l'une des revendications 1 à 10, dans lequel la poudre catalytique est retenue dans l'espace annulaire (30) par un joint en matière fibreuse au niveau de chacune des extrémités de l'espace annulaire (30), avantageusement, le joint en matière fibreuse est maintenu en compression contre la poudre catalytique par un ressort, le ressort étant en butée contre une plaque de maintien lié mécaniquement du tube.

12. Réacteur selon l'une des revendications 1 à 11, dans lequel la paroi interne est dépourvue d'ouverture sur une première section et une deuxième section qui s'étendent à partir, respectivement, de la première extrémité (11) et de la deuxième extrémité (12), la première section et la deuxième section étant en recouvrement avec le lit de poudre sur une hauteur H1, la hauteur H1 étant comprise entre 0,2 fois et 10 fois, avantageusement comprise entre 1 fois et 2 fois, la distance D₁ séparant une ouverture de distribution d'une ouverture collectrice (53) immédiatement adjacente, et mesurée le long de la surface externe de la paroi externe (15).

13. Réacteur selon l'une des revendications 1 à 12, dans lequel l'insert creux (20) est muni de moyens de centrage maintenant ce dernier en position coaxiale avec le tube creux (10), de manière avantageuse, les moyens de centrage comprennent des bossages formés sur la deuxième paroi.

14. Réacteur selon l'une des revendications 1 à 13, dans lequel l'ouverture collectrice (53) et les ouvertures de distributrices présentent une largeur comprise entre 1/100 et 1/2, avantageusement comprise entre 1/20 et 1/4, du diamètre du tube creux (10).

15. Réacteur selon l'une des revendications 1 à 14, dans lequel l'insert creux (20) forme une pièce monobloc.

## Patentansprüche

1. Festbett-Rohrreaktor (1), der sich entlang einer Längsachse XX' zwischen einem ersten Ende (11) und einem zweiten Ende (12) erstreckt, wobei der Reaktor ein katalytisches Pulverbett umfasst, das in einem ringförmigen Raum (30) eingeschlossen ist, der durch eine Außenwand (15) eines Hohlrohrs (10) und eine Innenwand (21) eines hohlen Einsatzes (20), der koaxial im Hohlrohr (10) angeordnet ist, begrenzt wird,
wobei der hohle Einsatz (20) mindestens eine Verteilerkammer (40) und mindestens eine Sammelkammer (50) umfasst, die durch mindestens eine erste Trennwand (60) voneinander getrennt sind, wobei die mindestens eine Verteilerkammer (40) eine Vielzahl von Verteilerfächern (40a, 40b, 40c, 40d und 40e) umfasst, die durch eine oder mehrere zweite Trennwände (41a, 41b, 41c und 41d) voneinander getrennt sind, wobei jedes Verteilerfach (40a, 40b, 40c, 40d und 40e) und die mindestens eine Sammelkammer (50) jeweils eine Gaseinlassöffnung (42a, 42b, 42c, 42d und 42e) auf Höhe des ersten Endes (11) und eine Gasauslassöffnung (51) auf Höhe des zweiten Endes (12) umfassen,
wobei die Innenwand (21) Verteilungsöffnungen (43a, 43b, 43c, 43d und 43e) und mindestens eine Sammelöffnung (53) umfasst, die sich über eine Länge L erstrecken, wobei jede Verteilungsöffnung (43a, 43b, 43c, 43d und 43e) die Verteilung eines Gases, das durch eine Einlassöffnung (42a, 42b, 42c, 42d und 42e) in ein Verteilerfach eingelassen werden kann, zum ringförmigen Raum (30) hin ermöglicht und die Sammelöffnung (53) das Sammeln des im ringförmigen Raum (30) verteilten Gases durch die Sammelkammer (50) ermöglicht.

2. Reaktor nach Anspruch 1, wobei der Reaktor auf Höhe des ersten Endes (11) bzw. auf Höhe des zweiten Endes (12) einen Verteilerraum (13) und einen Sammelraum (14) umfasst, zwischen denen der hohle Einsatz (20) angeordnet ist.

3. Reaktor nach Anspruch 2, wobei die Verteilerfächer (40a, 40b, 40c, 40d und 40e) auf Höhe des zweiten Endes (12) abgedichtet sind und die mindestens eine Sammelkammer (50) auf Höhe des ersten Endes (11) abgedichtet ist.

4. Reaktor nach Anspruch 2 oder 3, wobei jedes Verteilerfach vom Verteilerraum (13) durch eine Wand, die sogenannte Einlasswand, getrennt ist, in der die Einlassöffnung (42a, 42b, 42c, 42d und 42e) vorgesehen ist, wobei optional jede Einlassöffnung (42a, 42b, 42c, 42d und 42e) dazu ausgebildet ist, dem Gas, das in das ihm zugeordneten Verteilerfach eingelassen werden kann, einen Druckverlust aufzuerlegen, wobei optional der durch eine Einlassöffnung (42a, 42b, 42c, 42d und 42e) auferlegte Druckverlust als Funktion eines Abstands, der sogenannte reaktive Abstand, der im ringförmigen Raum (30) zwischen den Verteilungsöffnungen (43a, 43b, 43c, 43d und 43e) des betrachteten Verteilerfachs und der Sammelöffnung (53), die dieser Verteilungsöffnung (43a, 43b, 43c, 43d und 43e) am nächsten liegt, gemessen wird, angepasst wird.

5. Reaktor nach Anspruch 4, wobei der durch eine Einlassöffnung (42a, 42b, 42c, 42d und 42e) auferlegte Druckverlust umso größer ist, je geringer der reaktive Abstand ist, wobei optional der einergegebenen Einlassöffnung (42a, 42b, 42c, 42d und 42e) zugeordnete Druckverlust durch die Größe der Einlassöffnung (42a, 42b, 42c, 42d und 42e) angepasst wird.

6. Reaktor nach Anspruch 5, wobei in der Einlassöffnung (42a, 42b, 42c, 42d und 42e) ein poröses Element untergebracht ist, wobei das poröse Element eine Porosität aufweist, die es ermöglicht, den Druckverlust aufzuerlegen, wobei das poröse Element optional mindestens eines der folgenden Materialien umfassen kann: ein Fasermaterial, insbesondere eine Wolle, ein Geflecht oder ein metallisches oder keramisches Gewebe.

7. Reaktor nach einem der Ansprüche 2 bis 6, wobei der Verteilerraum (13) einen Volumenabschnitt umfasst, in den die Einlassöffnungen münden, wobei der Volumenabschnitt mit einer Gasversorgungsleitung verbunden ist.

8. Reaktor nach einem der Ansprüche 2 bis 6, wobei der Verteilerraum (13) Volumenteilabschnitte (45a, 45b und 45c) umfasst, in die jeweils mindestens eine Einlassöffnung (42a, 42b, 42c, 42d und 42e) mündet.

9. Reaktor nach Anspruch 8, wobei die Volumenteilabschnitte (45a, 45b und 45c) ringförmige Einlassräume bilden, die konzentrisch angeordnet und durch dichte Ringwände (46a, 46b) getrennt sind, wobei optional mehrere Einlassöffnungen in mindestens einen der Volumenteilabschnitte (45a, 45b und 45c) münden, wobei optional jeder der Volumenteilabschnitte mit einer anderen Gaseinlassleitung verbunden ist.

10. Reaktor nach einem der Ansprüche 1 bis 9, wobei der Reaktor mit einem porösen Film versehen ist, der die Innenwand (21) bedeckt, und dazu angeordnet ist, einen Durchlass von Pulver aus dem katalytischen Pulverbett durch die Verteilungsöffnungen (43a, 43b, 43c, 43d und 43e) und/oder die Sammelöffnung (53) zu verhindern.

11. Reaktor nach einem der Ansprüche 1 bis 10, wobei das katalytische Pulver im ringförmigen Raum (30) durch eine Dichtung aus Fasermaterial auf Höhe jedes der Enden des ringförmigen Raums (30) zurückgehalten wird, wobei die Dichtung aus Fasermaterial vorteilhafterweise durch eine Feder unter Druck gegen das katalytische Pulver gehalten wird, wobei die Feder an einer mechanisch verbundenen Halteplatte des Rohrs anliegt.

12. Reaktor nach einem der Ansprüche 1 bis 11, wobei die Innenwand in einem ersten Abschnitt und einem zweiten Abschnitt, die sich vom ersten Ende (11) bzw. vom zweiten Ende (12) erstrecken, keine Öffnungen aufweist, wobei der erste Abschnitt und der zweite Abschnitt sich mit dem Pulverbett auf einer Höhe H1 überlappen, wobei die Höhe H1 zwischen dem 0,2-Fachen und dem 10-Fachen, vorteilhafterweise zwischen dem 1-Fachen und dem 2-Fachen beträgt, wobei der Abstand D₁ eine Verteilungsöffnung von einer unmittelbar benachbarten Sammelöffnung (53) trennt und entlang der Außenfläche der Außenwand (15) gemessen wird.

13. Reaktor nach einem der Ansprüche 1 bis 12, wobei der hohle Einsatz (20) mit Zentriermitteln versehen ist, die letzteren in einer koaxialen Position mit dem Hohlrohr (10) halten, wobei die Zentriermittel vorteilhafterweise Vorsprünge umfassen, die an der zweiten Wand ausgebildet sind.

14. Reaktor nach einem der Ansprüche 1 bis 13, wobei die Sammelöffnung (53) und die Verteilungsöffnungen eine Breite zwischen 1/100 und 1/2, vorteilhafterweise zwischen 1/20 und 1/4, des Durchmessers des Hohlrohrs (10) aufweisen.

15. Reaktor nach einem der Ansprüche 1 bis 14, wobei der hohle Einsatz (20) ein einstückiges Teil bildet.

## Claims

1. A fixed-bed tubular reactor (1) which extends, according to a longitudinal axis XX', between a first end (11) and a second end (12), said reactor comprises a catalytic powder bed confined in an annular space (30) delimited by an inner wall (15) of a hollow tube (10) and an outer wall (21) of a hollow insert (20) disposed coaxially in the hollow tube (10),
the hollow insert (20) comprises at least one distribution chamber (40) and at least one collection chamber (50), separated from one another by at least one first partition wall (60), the at least one distribution chamber (40) comprising a plurality of distribution compartments (40a, 40b, 40c, 40d and 40e) separated from one another by one or more second partition wall(s) (41a, 41b, 41c and 41d), each distribution compartment (40a, 40b, 40c, 40d and 40e) and the at least one collection chamber (50) comprising, respectively, a gas intake opening (42a, 42b, 42c, 42d and 42e) at the first end (11) and a gas discharge opening (51) at the second end (12),
the inner wall (21) comprises distributing openings (43a, 43b, 43c, 43d and 43e) and at least one collecting opening (53), which extend over a length L, each distributing opening (43a, 43b, 43c, 43d and 43e) enabling the distribution of a gas capable of being admitted through an intake opening (42a, 42b, 42c, 42d and 42e) into a distribution compartment towards the annular space (30) and the collecting opening (53) enabling the collection of the gas distributed in the annular space (30) by the collection chamber (50).

2. The reactor according to claim 1, wherein said reactor comprises, at the first end (11) and at the second end (12), respectively, a distributing space (13) and a collecting space (14) between which the hollow insert (20) is disposed.

3. The reactor according to claim 2, wherein the distribution chambers (40a, 40b, 40c, 40d and 40e) are sealed at the second end (12), and the at least one collection chamber (50) is sealed at the first end (11).

4. The reactor according to claim 2 or 3, wherein each distribution compartment is separated from the distributing space (13) by a wall, called intake wall, in which the intake opening (42a, 42b, 42c, 42d and 42e) is formed, optionnally
each intake opening (42a, 42b, 42c, 42d and 42e) is shaped so as to impose a pressure drop on the gas capable of being admitted into the distribution compartment that is associated thereto, optionally the pressure drop imposed by an intake opening (42a, 42b, 42c, 42d and 42e) is adjusted according to a distance, called reactive distance, measured in the annular space (30), between the distributing opening (43a, 43b, 43c, 43d and 43e) of the considered distribution compartment and the collecting opening (53) the closest to said distributing opening (43a, 43b, 43c, 43d and 43e).

5. The reactor according to claim 4, wherein the pressure drop imposed by an intake opening (42a, 42b, 42c, 42d and 42e) is even higher as the reactive distance is short, optionally wherein the pressure drop associated to a given intake opening (42a, 42b, 42c, 42d and 42e) is adjusted by the size of said intake opening (42a, 42b, 42c, 42d and 42e).

6. The reactor according to claim 5, wherein a porous element is accommodated within the intake opening (42a, 42b, 42c, 42d and 42e), the porous element having a porosity allowing imposing the pressure drop, optionnally wherein the porous element may comprise at least one of the materials selected from among: a fibrous material, in particular wool, a braid or a metal or ceramic fabric.

7. The reactor according to one of claims 2 to 6, wherein the distributing space (13) comprises a volumetric section into which the intake openings open, said volumetric section being connected to a gas supply duct.

8. The reactor according to one of claims 2 to 6, wherein the distributing space (13) comprises volumetric subsections (45a, 45b and 45c) at least one intake opening (42a, 42b, 42c, 42d and 42e) opens into each of which.

9. The reactor according to claim 8, wherein the volumetric subsections (45a, 45b and 45c) form annular intake spaces disposed concentrically and separated by tight annular walls (46a, 46b), optionally wherein several intake openings open into at least one of the volumetric subsections (45a, 45b and 45c), optionally wherein each of the volumetric subsections is connected to a different gas intake duct.

10. The reactor according to one of claims 1 to 9, wherein said reactor is provided with a porous film covering the inner wall (21), and arranged so as to prevent the passage of powder from the catalytic powder bed through the distributing openings (43a, 43b, 43c, 43d and 43e) and/or the collecting opening (53).

11. The reactor according to one of claims 1 to 10, wherein the catalytic powder is retained in the annular space (30) by a seal made of fibrous material at each of the ends of the annular space (30), advantageously, the seal made of fibrous material is held in compression against the catalytic powder by a spring, the spring abutting against a mechanically-linked holding plate of the tube.

12. The reactor according to one of claims 1 to 11, wherein the inner wall has no opening on a first section and a second section which extend from, respectively, the first end (11) and the second end (12), the first section and the second section overlapping with the powder bed over a height H1, the height H1 being comprised between 0.2 times and 10 times, advantageously comprised between 1 times and 2 times, the distance D₁ separating a distributing opening from an immediately adjacent collecting opening (53), and measured along the outer surface of the outer wall (15).

13. The reactor according to one of claims 1 to 12, wherein the hollow insert (20) is provided with centring means holding the latter in a position coaxial with the hollow tube (10), advantageously, the centring means comprise bosses formed on the second wall.

14. The reactor according to one of claims 1 to 13, wherein the collecting opening (53) and the distributing openings have a width comprised between 1/100 and 1/2, advantageously comprised between 1/20 and 1/4, of the diameter of the hollow tube (10).

15. The reactor according to one of claims 1 to 14, wherein the hollow insert (20) forms a single-piece part.
